# EUROPEAN PATENT APPLICATION

(11) **EP 3 885 169 A1**
(43) Date of publication of application: **29.09.2021**
(21) Application number: 19944587.5
(22) Date of filing: 18.12.2019
(51) Int. Cl.: B60H 1/04, B60H 1/00

(54) **INTEGRATED EXPANSION KETTLE FOR ELECTRIC CAR, AND ELECTRIC CAR**

(30) Priority: 02.09.2019 CN 201910822053
(71) Applicant: Guangdong Xiaopeng Motors Technology Co., Ltd., Guangzhou (CN)
(72) Inventor: ZHANG, Zhengfeng, Guangzhou, Guangdong 510555 (CN); LIANG, Tongsheng, Guangzhou, Guangdong 510555 (CN); LYU, Yang, Guangzhou, Guangdong 510555 (CN); FU, Yongjian, Guangzhou, Guangdong 510555 (CN)
(74) Representative: Isarpatent
(86) International application number: PCT/CN2019/126416
(87) International publication number: WO 2021/042624

(57) **Abstract**

Disclosed are an integrated expansion tank for an electric vehicle and an electric vehicle. The integrated expansion tank includes a multi-way valve, an expansion tank and cooling-circuit pumps, wherein the multi-way valve and the cooling-circuit pumps are fixed or integrally formed with a shell of the expansion tank, the shell of the expansion tank is further provided with a plurality of cooling ports in communication with cooling circuits of the electric vehicle and a plurality of heating ports in communication with a heating circuit of the electric vehicle, the multi-way valve is used to change the on-state of the plurality of cooling ports, and the cooling-circuit pumps are provided in the cooling circuits. The integrated expansion tank according to the present disclosure can supply water and exhaust gas for the cooling circuits and the heating circuit simultaneously and is shared by the cooling circuits and the heating circuit, and both of the multi-way valve and the cooling-circuit pumps are integrated on the expansion tank, so that the quantity of the parts is reduced, the assembling steps are simplified, the pipe connection is optimized, the interior of a front compartment is kept clean and tidy, and the light-weighting design of the electric vehicle is facilitated.

## Description

### TECHNICAL FIELD

The present disclosure relates to the field of vehicles, and in particular to an integrated expansion tank for an electric vehicle and an electric vehicle.

### BACKGROUND

Existing electric vehicles comprise three coolant circulating circuits: a battery cooling circuit, an electric-motor-electrically-controlled cooling circuit and a heating circuit, and the parts such as the expansion tanks, the pumps, the electromagnetic water valves and the pipes of the three coolant circulating circuits are mainly provided in the front compartment of the vehicles. However, the front compartment of vehicles has a small space, so those parts might be out of order and disturbed by each other, which in turn affects the performance and the attractiveness of the system and makes assembling and maintenance difficult. In addition, 2-3 expansion tanks have to be provided for the three coolant circulating circuits, which occupies a large arrangement space and increases the cost.

### SUMMARY

The present disclosure aims to solve, at least to some extent, one of the above technical problems in the prior art. Therefore, the present disclosure provides an integrated expansion tank for an electric vehicle, which can save the space occupied by the coolant circulating circuits of the electric vehicle and reduce the cost.

The present disclosure further provides a vehicle provided with the integrated expansion tank for an electric vehicle.

The integrated expansion tank for an electric vehicle according to an embodiment of the present disclosure comprises: a multi-way valve; an expansion tank, wherein the multi-way valve and a shell of the expansion tank are fixed or integrally formed, the shell of the expansion tank is further provided with a plurality of cooling ports in communication with cooling circuits of the electric vehicle, and the multi-way valve is used to change an on-state of the plurality of cooling ports; and cooling-circuit pumps, wherein the cooling-circuit pumps are provided in the cooling circuits, and the cooling-circuit pumps and the shell of the expansion tank are fixed or integrally formed.

The integrated expansion tank for an electric vehicle according to an embodiment of the present disclosure can supply water and exhaust gas for the cooling circuits and can switch the on-state of the plurality of cooling circuits, and all of the multi-way valve and shells of the cooling-circuit pumps are fixed or integrally formed with the shell of the expansion tank, so that the quantity of the parts is reduced, the pipe connection is optimized, the interior of a front compartment is kept clean and tidy, and the light-weighting design of the electric vehicle is facilitated.

According to some embodiments of the present disclosure, the multi-way valve and the plurality of cooling ports at least partially stretch into the shell of the expansion tank, and portions of the plurality of cooling ports that stretch into the shell of the expansion tank are adapted for being connected to a portion of the multi-way valve that stretches into the shell of the expansion tank.

According to some embodiments of the present disclosure, the cooling circuits include a battery cooling circuit and an electric-motor-electrically-controlled cooling circuit, and the multi-way valve has a parallel-connection state and a series-connection state, wherein the battery cooling circuit and the electric-motor-electrically-controlled cooling circuit are connected in parallel when the multi-way valve is in the parallel-connection state, and are connected in series when the multi-way valve is in the series-connection state.

Optionally, the cooling ports include an electric-motor-circuit outlet port, an electric-motor-circuit inlet port, a battery-circuit outlet port, and a battery-circuit inlet port, the electric-motor-circuit outlet port is connected to a water returning pipe of the electric-motor-electrically-controlled cooling circuit, the electric-motor-circuit inlet port is connected to an inlet pipe of the electric-motor-electrically-controlled cooling circuit, the battery-circuit outlet port is connected to a water returning pipe of the battery cooling circuit, and the battery-circuit inlet port is connected to an inlet pipe of the battery cooling circuit.

The cooling ports further include a heat-dissipating-circuit outlet port and a heat-dissipating-circuit inlet port, the heat-dissipating-circuit inlet port is in communication with an interior of the electric-motor-circuit outlet port, a radiator is provided between the heat-dissipating-circuit outlet port and the heat-dissipating-circuit inlet port, the heat-dissipating-circuit outlet port is connected to an outlet pipe of the radiator, and the heat-dissipating-circuit inlet port is connected to an inlet pipe of the radiator.

Optionally, the electric-motor-circuit outlet port is provided with a first hole, the heat-dissipating-circuit inlet port is provided with a second hole, the first hole and the second hole are located within a cavity of the expansion tank, and a cross-sectional area of a joint between the electric-motor-circuit outlet port and the heat-dissipating-circuit inlet port is less than a cross-sectional area of a channel of the electric-motor-circuit outlet port.

According to some embodiments of the present disclosure, the multi-way valve is a five-way electromagnetic valve; when the five-way electromagnetic valve is in the parallel-connection state, the heat-dissipating-circuit outlet port is in communication with the electric-motor-circuit inlet port, and the battery-circuit outlet port is in communication with the battery-circuit inlet port; and when the five-way electromagnetic valve is in the series-connection state, the electric-motor-circuit outlet port is in communication with the battery-circuit inlet port, and the battery-circuit outlet port is in communication with the electric-motor-circuit inlet port.

According to some embodiments of the present disclosure, the cooling-circuit pumps include a battery-circuit pump provided in the battery cooling circuit and an electric-motor-electrically-controlled-circuit pump provided in the electric-motor-electrically-controlled cooling circuit, both of impeller shells of the battery-circuit pump and the electric-motor-electrically-controlled-circuit pump are integrated on the shell of the expansion tank and are provided with an inlet and an outlet, the battery-circuit inlet port is in communication with the inlet of the battery-circuit pump, and the electric-motor-circuit inlet port is in communication with the inlet of the electric-motor-electrically-controlled-circuit pump.

According to some embodiments of the present disclosure, the shell of the expansion tank is further provided with a plurality of heating ports in communication with a heating circuit of the electric vehicle, and the heating ports include a heating water-supplying port and a heating gas-exhausting port, the heating water-supplying port is in communication with the expansion tank and the heating circuit, and the heating gas-exhausting port is in communication with the expansion tank and the heating circuit.

In another aspect, an embodiment of the present disclosure provides an electric vehicle, comprising the integrated expansion tank for an electric vehicle stated above.

The advantages of the electric vehicle over the prior art are the same as the advantages of the integrated expansion tank for an electric vehicle stated above, and thus will no longer be detailed herein.

Other aspects and advantages of the present disclosure will be given in the following description, and some of the aspects and advantages will become apparent in the following description, or be known in the implementation practice of the present disclosure.

### BRIEF DESCRIPTION OF THE DRAWINGS

Fig. 1 is a schematic diagram of the connection of an integrated expansion tank, cooling circuits and a heating circuit;
Fig. 2 is a schematic diagram of an integrated expansion tank;
Fig. 3 is a schematic diagram of the connection of an integrated expansion tank, cooling circuits and a heating circuit when a multi-way valve is in a parallel-connection state;
Fig. 4 is a schematic diagram of the connection of an integrated expansion tank, cooling circuits and a heating circuit when the multi-way valve is in a series-connection state; and
Fig. 5 is a schematic diagram of the positions of a first hole and a second hole.

### Reference signs:

1, electric-motor-electrically-controlled-circuit pump; 2, battery-circuit pump; 3, expansion tank; 4, multi-way valve; a, heat-dissipating-circuit outlet port; b, heat-dissipating-circuit inlet port; c, electric-motor-circuit outlet port; d, electric-motor-circuit inlet port; e, battery-circuit outlet port; f, battery-circuit inlet port; h, heating water-supplying port; i, heating gas-exhausting port; 5, radiator; 6, electric-motor-electrically-controlled cooling circuit; 7, battery cooling circuit; 8, heating circuit; 81, heating pump; 91, first hole; 92, second hole; and 93, partition plate.

### DETAILED DESCRIPTION

The embodiments of the present disclosure will be described in detail below. Examples of the embodiments are illustrated in the accompanying drawings, wherein, throughout the specification, identical or similar reference signs represent identical or similar elements or elements with identical or similar functions. The embodiments described below with reference to the accompanying drawings are illustrative embodiments, are intended to explain the present disclosure, and should not be construed as limitations of the present disclosure.

It should be understood that the terms used to indicate directional or positional relations such as "longitudinal", "transverse", "length", "width", "thickness", "upper", "lower", "front", "back", "left", "right", "vertical", "horizontal", "top", "bottom", "inner" and "outer" in the description of the present disclosure are based on the directional or positional relations shown in the accompanying drawings, merely for the purposes of facilitating and simplifying the description of the present disclosure, do not indicate or imply that the devices or elements referred to must be in a specific direction or be configured and operated in a specific direction, and therefore should not be construed as limitations of the present disclosure.

In addition, the terms "first" and "second" are merely for the purpose of description, and should not be construed as indicating or implying relative importance or implicitly indicating the quantity of the technical features referred to. Therefore, a feature defined by "first" or "second" may explicitly or implicitly refer to the inclusion of one or more said features. Unless otherwise clearly specified, "plurality of" refers to at least two, such as two or three, in the description of the present disclosure.

Unless otherwise explicitly stated and defined, the terms such as "install", "connect", "couple" and "fix" in the present disclosure should be broadly understood. For example, they may refer to fixed connection, detachable connection or integrated connection; may be mechanical connection, electrical connection or mutual communication; and may be direct connection, or indirect connection via an intermediate medium, or internal communication or interactive relation of two elements. A person skilled in the art can appreciate the specific meanings of those terms in the present disclosure according to particular conditions.

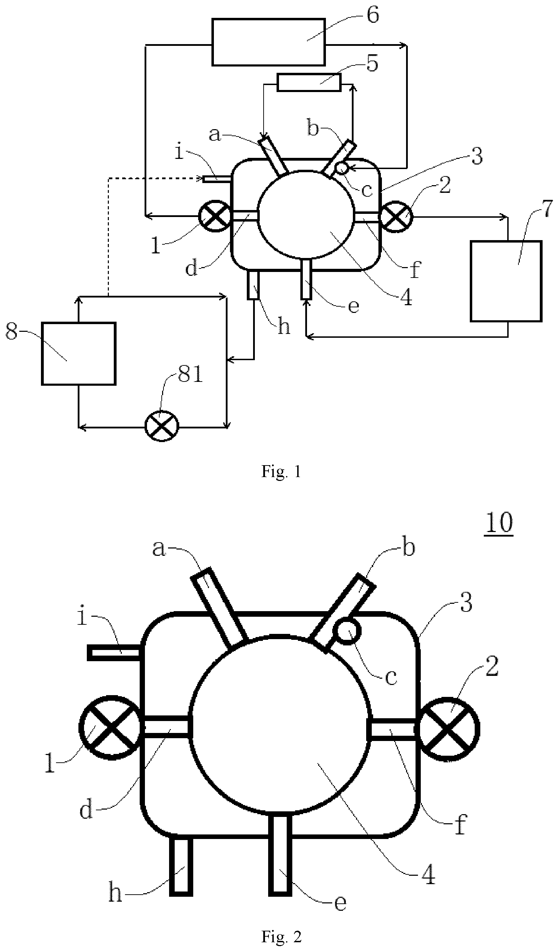

An integrated expansion tank 10 for an electric vehicle according to an embodiment of the present disclosure will be described in detail below with reference to Figs. 1 to 5.

Referring to Figs. 1 and 2, an integrated expansion tank 10 for an electric vehicle according to an embodiment of the present disclosure may comprise: a multi-way valve 4, cooling-circuit pumps and an expansion tank 3, wherein the multi-way valve 4 and the shells of the cooling-circuit pumps are fixed or integrally formed with the shell of the expansion tank 3; in other words, all of the multi-way valve 4 and the cooling-circuit pumps are integrated on the shell of the expansion tank 3. Therefore, the assembling steps of the multi-way valve 4 and the expansion tank 3 are simplified, and the connecting pipes between the multi-way valve 4 and the expansion tank 3 are reduced.

The shell of the expansion tank 3 is further provided with a plurality of cooling ports in communication with cooling circuits of the electric vehicle and a plurality of heating ports in communication with a heating circuit 8 of the electric vehicle, and the multi-way valve 4 is used to change the on-state of the plurality of cooling ports.

In other words, the cooling circuits and the heating circuit 8 share the same one integrated expansion tank 10, so that the total quantity of expansion tanks 3 on the electric vehicle can be reduced, thereby saving the arrangement space of coolant circulating circuits of the electric vehicle. Even if the integrated expansion tank 10 is provided in a front compartment of the vehicle, a sufficient arrangement space can be reserved to place other parts. Furthermore, only one integrated expansion tank 10 is provided, so that the front compartment can be kept clean and tidy, the layout of the front compartment is beautified, and the weight of the whole electric vehicle is reduced. The length and the quantity of the connecting pipes between the cooling circuits and the integrated expansion tank 10 are reduced, so that heat losses are reduced, the performance of a cooling system is improved, and the difficulty in assembling and maintenance is lowered.

The expansion tank 3 may comprise an upper shell and a lower shell, wherein the upper shell is located over the lower shell and may be fixed to the lower shell by hot-melt welding. In some optional embodiments, a shell of the multi-way valve 4 and the lower shell of the expansion tank 3 may be injection-molded integrally. In some other optional embodiments, the shell of the multi-way valve 4 may be connected to the shell of the expansion tank 3 by a fastener.

The multi-way valve 4 can combine the function of a three-way valve and the function of a four-way valve. In case of a plurality of cooling circuits, different cooling circuits can be communicated in series or in parallel by changing the on-state of the multi-way valve 4. One multi-way valve 4 can fulfill multiple functions, so that the quantity of the parts is significantly reduced.

The cooling-circuit pumps are provided in the cooling circuits and are integrated on the shell of the expansion tank 3. Particularly, the impeller shells of the cooling-circuit pumps and the shell of the expansion tank 3 are fixed or integrally formed, and the impeller shells are provided with a inlet and a outlet. Therefore, both of the inlets and the outlets of the cooling-circuit pumps are integrated in the shell of the expansion tank 3, and a coolant in the expansion tank 3 may enter the cooling-circuit pumps via the inlet of the cooling-circuit pump in the shell of the expansion tank 3 and then enters the cooling circuits via a outlet of the cooling-circuit pump in the shell of the expansion tank 3. Accordingly, the assembling steps of the cooling-circuit pumps and the expansion tank 3 are simplified, and the connecting pipes between the cooling-circuit pumps and the expansion tank 3 are reduced.

The integrated expansion tank 10 shown in Fig. 2 is integrated with the expansion tank 3, the cooling ports, the heating ports, the multi-way valve 4 and the cooling-circuit pumps, so that the quantity of the parts and the quantity of the connecting pipes are reduced, and the assembling process is simplified. Optionally, the shells of the cooling-circuit pumps and the lower shell of the expansion tank 3 may be injection-molded integrally, and may also be connected by a fastener.

The integrated expansion tank 10 for an electric vehicle according to an embodiment of the present disclosure can supply water and exhaust gas for the cooling circuits and the heating circuit 8 simultaneously, thereby being shared by the cooling circuits and the heating circuit 8. The integrated expansion tank 10 can also change the on-state of a plurality of cooling circuits, and the multi-way valve 4 and the cooling-circuit pumps are fixed or integrally formed with the shell of the expansion tank 3, so that the quantity of the parts is reduced, the assembling process is simplified, the arrangement of the other parts such as the pipes is greatly optimized, the interior of the front compartment is kept clean and tidy, and the light-weighting design of the electric vehicle is facilitated.

In a particular embodiment, the multi-way valve 4 at least partially stretches into the shell of the expansion tank 3, the plurality of cooling ports at least partially stretch into the shell of the expansion tank 3, and the portions of the plurality of cooling ports that stretch into the shell of the expansion tank 3 are connected to the portion of the multi-way valve 4 that stretches into the shell of the expansion tank 3. Therefore, the coolant in the expansion tank 3 can be supplied into the cooling circuits in time when the on-state of the plurality of cooling ports is changed by means of the multi-way valve 4, and redundant coolants and high-pressure gas in the cooling circuits can flow into the expansion tank 3 to be discharged through a bypass water pipe of the expansion tank 3. In case of a plurality of cooling circuits, the expansion tank 3 can be shared by the plurality of cooling circuits, so that the quantity of expansion tanks 3 is reduced, and the space is saved.

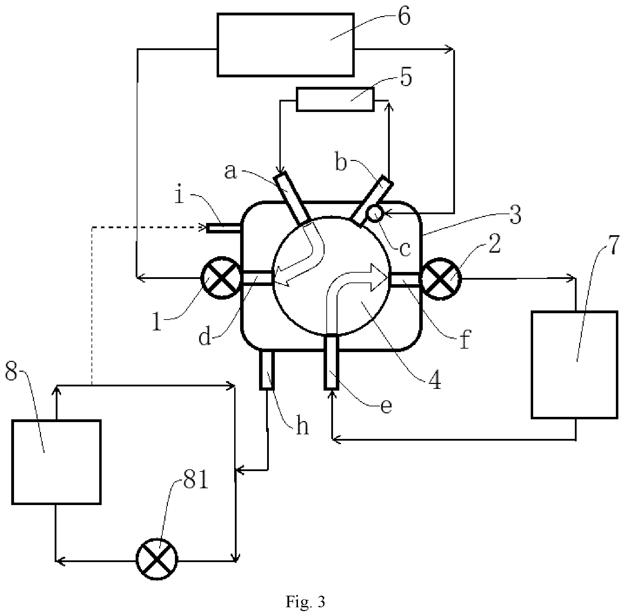

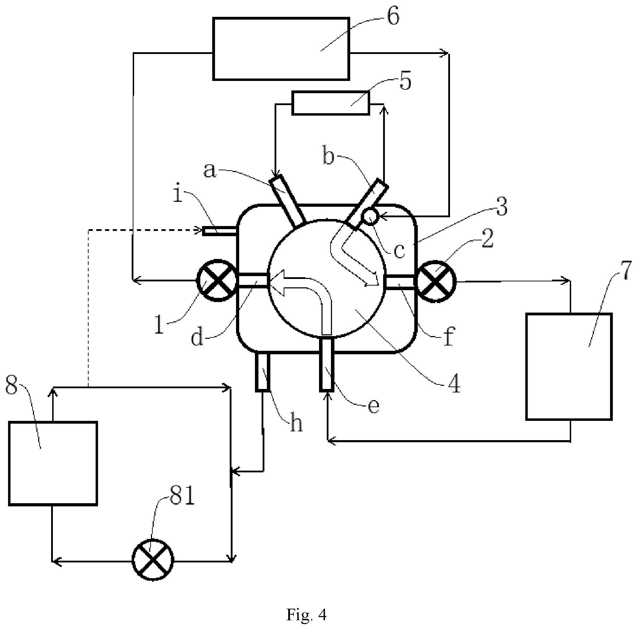

In the embodiments shown in Figs. 1, 3 and 4, the cooling circuits include a battery cooling circuit 7 and an electric-motor-electrically-controlled cooling circuit 6, and the multi-way valve 4 is a five-way electromagnetic valve which has a parallel-connection state shown in Fig. 3 and a series-connection state shown in Fig. 4. When the five-way electromagnetic valve is in the parallel-connection state, the battery cooling circuit 7 and the electric-motor-electrically-controlled cooling circuit 6 are connected in parallel. When the five-way electromagnetic valve is in the series-connection state, the battery cooling circuit 7 and the electric-motor-electrically-controlled cooling circuit 6 are connected in series. The five-way electromagnetic valve can be controlled to realize the switching of the series connection and the parallel connection of the different cooling circuits.

Particularly, as shown in Figs. 1 and 2, the cooling ports may include an electric-motor-circuit outlet port c, an electric-motor-circuit inlet port *d*, a battery-circuit outlet port e, and a battery-circuit inlet port f, the electric-motor-circuit outlet port c is connected to a water returning pipe of the electric-motor-electrically-controlled cooling circuit 6, the electric-motor-circuit inlet port d is connected to an inlet pipe of the electric-motor-electrically-controlled cooling circuit 6, the battery-circuit outlet port *e* is connected to a water returning pipe of the battery cooling circuit 7, and the battery-circuit inlet port *ƒ* is connected to an inlet pipe of the battery cooling circuit 7.

The cooling ports may further include a heat-dissipating-circuit outlet port *α* and a heat-dissipating-circuit inlet port *b,* the heat-dissipating-circuit inlet port *b* is in communication with the interior of the electric-motor-circuit outlet port c, a radiator 5 is provided between the heat-dissipating-circuit outlet port *α*and the heat-dissipating-circuit inlet port *b,* the heat-dissipating-circuit outlet port *a* is connected to an outlet pipe of the radiator 5, and the heat-dissipating-circuit inlet port b is connected to an inlet pipe of the radiator 5.

A heat dissipating circuit is formed by the heat-dissipating-circuit outlet port *α*, the radiator 5, and the heat-dissipating-circuit inlet port b, and, when closed, can dissipate heat for the electric-motor-electrically-controlled cooling circuit 6.

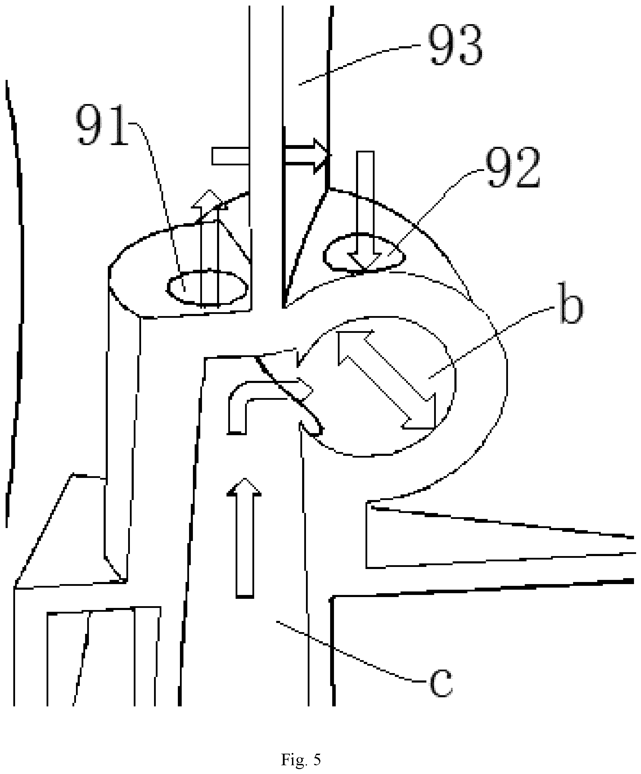

Optionally, as shown in Figs. 1, 2 and 5, the electric-motor-circuit outlet port c is provided with a first hole 91, and the heat-dissipating-circuit inlet port b is provided with a second hole 92. The first hole 91 and the second hole 92 are located within the cavity of the expansion tank 3; in other words, the first hole 91 and the second hole 92 are open towards the cavity of the expansion tank 3. In other words, both of the first hole 91 and the second hole 92 are in communication with the cavity of the expansion tank 3. The cross-sectional area of a joint between the electric-motor-circuit outlet port c and the heat-dissipating-circuit inlet port b is less than the cross-sectional area of the channel of the electric-motor-circuit outlet port c. Therefore, a pressure difference is generated between the first hole 91 and the second hole 92 due to a sudden change of the coolant at the joint between the electric-motor-circuit outlet port c and the heat-dissipating-circuit inlet port b; in other words, a pressure difference is generated between the electric-motor-circuit outlet port c and the heat-dissipating-circuit inlet port b. For example, as shown in Fig. 5, the pressure in the first hole 91 is high and the pressure in the second hole 92 is low, so a bypass-water minor circulation is formed between the first hole 91 and the second hole 92 outside the electric-motor-circuit outlet port c and the heat-dissipating-circuit inlet port b: the electric-motor-circuit outlet port c → the first hole 91 → the cavity of the expansion tank 3 → the second hole 92 → the heat-dissipating-circuit inlet port b. Accordingly, a minor circulation is formed within the cavity of the expansion tank 3 to carry out gas-liquid exchange to realize water supplying and gas exhausting.

For example, for the electric-motor-electrically-controlled cooling circuit 6, the minor circulation is formed in the expansion tank 3 by means of the pressure difference between the first hole 91 and the second hole 92 to carry out gas-liquid exchange to supply water and exhaust gas, so that the effect of the expansion tank 3 is brought into full play.

As shown in Fig. 5, a partition plate 93 is provided between the first hole 91 and the second hole 92. The partition plate 93 may be a reinforcing rib on the inner wall of the cavity of the expansion tank 3, to improve the strength and the rigidity of the expansion tank 3. In some embodiments, the partition plate 93 may partition a water region, and is provided with a through hole, which is used to communicate the first hole 91 and the second hole 92, and allows water to flow through it to realize a minor circulation of the water between the first hole 91 and the second hole 92. In some other optional embodiments, the partition plate 93 does not completely partition the water region, the bypass-water minor circulation between the first hole 91 and the second hole 92 passes across the partition plate 93 along the edge of the partition plate 93, so that the water path is extended and the water velocity is slowed, to enable bubbles to be separated from the liquid.

The flow direction of the coolant is controlled by controlling the five-way electromagnetic valve. When the five-way electromagnetic valve is in the parallel-connection state, in the five-way electromagnetic valve, the heat-dissipating-circuit outlet port *a* is in communication with the electric-motor-circuit inlet port d, and the battery-circuit outlet port *e* is in communication with the battery-circuit inlet port *ƒ*. In this case, the flow direction of the coolant in the battery cooling circuit 7 is as follows: the battery-circuit outlet port *e* → the battery-circuit inlet port *ƒ* → the battery-circuit outlet port e; the flow direction of the coolant in the electric-motor-electrically-controlled cooling circuit 6 is as follows: the electric-motor-circuit outlet port c → the heat-dissipating-circuit inlet port *b* → the heat-dissipating-circuit outlet port *α*→ the electric-motor-circuit inlet port *d* → the electric-motor-circuit outlet port c; and the battery cooling circuit 7 and the electric-motor-electrically-controlled cooling circuit 6 are connected in series and operate separately, and the heat dissipating circuit dissipates heat for the electric-motor-electrically-controlled cooling circuit.

When the five-way electromagnetic valve is in the series-connection state, in the five-way electromagnetic valve, the electric-motor-circuit outlet port c is in communication with the battery-circuit inlet port *ƒ*, and the battery-circuit outlet port *e* is in communication with the electric-motor-circuit inlet port d. The flow direction of the coolant in the battery cooling circuit 7 and the electric-motor-electrically-controlled cooling circuit 6 is as follows: the electric-motor-circuit outlet port c → the battery-circuit inlet port *ƒ*→ the battery-circuit outlet port *e* → the electric-motor-circuit inlet port d → the electric-motor-circuit outlet port c. The battery cooling circuit 7 and the electric-motor-electrically-controlled cooling circuit 6 operate in series. That is the working condition of electric-motor waste-heat recovery, and the heat dissipating circuit is disconnected.

The modes of water supplying and gas exhausting of the cooling circuits are as follows:

The electric-motor-electrically-controlled cooling circuit 6: a minor circulation is formed in the expansion tank 3 by means of the pressure difference between the first hole 91 and the second hole 92, to realize water supplying and gas exhausting.

The battery cooling circuit 7: when the battery cooling circuit 7 is connected in series with the electric-motor-electrically-controlled cooling circuit 6, water supplying and gas exhausting are realized by means of the pressure difference between the first hole 91 and the second hole 92.

Particularly, the cooling-circuit pumps may include a battery-circuit pump 2 and an electric-motor-electrically-controlled-circuit pump 1, wherein the battery-circuit pump 2 is provided in the battery cooling circuit 7, the electric-motor-electrically-controlled-circuit pump 1 is provided in the electric-motor-electrically-controlled cooling circuit 6, both of impeller shells of the battery-circuit pump 2 and the electric-motor-electrically-controlled-circuit pump 1 are integrated on the shell of the expansion tank 3 and are provided with a inlet and a outlet, the battery-circuit inlet port *ƒ* is in communication with the inlet of the battery-circuit pump 2, and the electric-motor-circuit inlet port d is in communication with the inlet of the electric-motor-electrically-controlled-circuit pump 1.

As shown in Fig. 2, both of the battery-circuit pump 2 and the electric-motor-electrically-controlled-circuit pump 1 are integrated on the shell of the expansion tank 3. In other words, the integrated expansion tank 10 shown in Fig. 2 is integrated with the expansion tank 3, the cooling ports, the heating ports, the five-way electromagnetic valve, the battery-circuit pump 2 and the electric-motor-electrically-controlled-circuit pump 1, so that the quantity of the parts and the quantity of the connecting pipes are reduced, and the assembling process is simplified. Optionally, the shells of the battery-circuit pump 2 and the electric-motor-electrically-controlled-circuit pump 1 and the lower shell of the expansion tank 3 may be injection-molded integrally, and may be connected by a fastener.

The heating ports include a heating water-supplying port h and a heating gas-exhausting port i, the heating water-supplying port *h* is in communication with the expansion tank 3 and the heating circuit 8, and the heating gas-exhausting port i is in communication with the expansion tank 3 and the heating circuit 8. The heating circuit 8 is separately supplied with water by means of the heating water-supplying port h and exhausts gas by means of the heating gas-exhausting port i. A heating pump 81 is provided in the heating circuit 8 and can provide power for the heating circuit 8.

The structure, volume and other parameters of the expansion tank 3 may be changed as needed. The quantity of the cooling circuits may be changed as needed. The quantity of the cooling-circuit pumps and the quantity of the cooling circuits may be the same. The quantity of the cooling ports may be adaptively changed and adjusted according to the quantity of the cooling circuits. The five-way electromagnetic valve may be replaced with a three-way electromagnetic valve or a four-way electromagnetic valve according to the quantity of the cooling circuits.

In another aspect, an embodiment of the present disclosure provides a vehicle comprising the integrated expansion tank 10 for an electric vehicle according to the above embodiments. With the expansion tank 3 as the center, the vehicle integrates the battery-circuit pump 2, the electric-motor-electrically-controlled-circuit pump 1, the five-way electromagnetic valve, the cooling ports and the heating ports, and the parts such as a plurality of expansion tanks, a three-way valve and a four-way valve of existing electric vehicles are integrated into the integrated expansion tank 10. Therefore, the quantity of the parts is reduced, the connecting pipes between the parts are omitted, the pipe connection is optimized, and the arrangement and part management are facilitated. The integrated expansion tank 10 can supply water and exhaust gas for the three coolant circulating circuits (i.e., the battery cooling circuit 7, the electric-motor-electrically-controlled cooling circuit 6 and the heating circuit 8) simultaneously by switching the on-state of the five-way electromagnetic valve, thereby being shared by the three circuits.

In the description of the present disclosure, the description of the reference terms such as "an embodiment", "some embodiments", "example", "particular example" or "some examples" are intended to indicate that specific features, structures, materials, or characteristics described in conjunction with said embodiment or example are included in at least an embodiment or example of the present disclosure. In this description, illustrative descriptions of those terms do not necessarily aim at the same embodiment or example. Moreover, the specific features, structures, materials, or characteristics described can be properly combined in any one or more embodiments or examples. In addition, a person skilled in the art can combine or integrate different embodiments or examples described in this description.

Although the embodiments of the present disclosure have been illustrated and described above, it can be understood that the above embodiments are merely illustrative, and should not be construed as limitations of the present disclosure. A person skilled in the art can make variations, modifications, substitutions and transformations to the above embodiments within the scope of the present disclosure.

## Claims

1. An integrated expansion tank for an electric vehicle, **characterized in that**, the expansion tank comprises:
a multi-way valve (4);
an expansion tank (3), wherein the multi-way valve (4) and a shell of the expansion tank (3) are fixed or integrally formed, the shell of the expansion tank (3) is further provided with a plurality of cooling ports in communication with cooling circuits of the electric vehicle, and the multi-way valve (4) is used to change an on-state of the plurality of cooling ports; and
cooling-circuit pumps, wherein the cooling-circuit pumps are provided in the cooling circuits, and shells of the cooling-circuit pumps and the shell of the expansion tank (3) are fixed or integrally formed.

2. The integrated expansion tank for an electric vehicle according to claim 1, **characterized in that**, the multi-way valve (4) and the plurality of cooling ports at least partially stretch into the shell of the expansion tank (3), and portions of the plurality of cooling ports that stretch into the shell of the expansion tank (3) are adapted for being connected to a portion of the multi-way valve (4) that stretches into the shell of the expansion tank (3).

3. The integrated expansion tank for an electric vehicle according to claim 1, **characterized in that**, the cooling circuits include a battery cooling circuit (7) and an electric-motor-electrically-controlled cooling circuit (6), and the multi-way valve (4) has a parallel-connection state and a series-connection state, wherein the battery cooling circuit (7) and the electric-motor-electrically-controlled cooling circuit (6) are connected in parallel when the multi-way valve (4) is in the parallel-connection state, and are connected in series when the multi-way valve (4) is in the series-connection state.

4. The integrated expansion tank for an electric vehicle according to claim 3, **characterized in that**, the cooling ports include an electric-motor-circuit outlet port (c), an electric-motor-circuit inlet port (d), a battery-circuit outlet port (e), and a battery-circuit inlet port (f), the electric-motor-circuit outlet port (c) is connected to a water returning pipe of the electric-motor-electrically-controlled cooling circuit (6), the electric-motor-circuit inlet port (d) is connected to an inlet pipe of the electric-motor-electrically-controlled cooling circuit (6), the battery-circuit outlet port (e) is connected to a water returning pipe of the battery cooling circuit (7), and the battery-circuit inlet port (f) is connected to an inlet pipe of the battery cooling circuit (7).

5. The integrated expansion tank for an electric vehicle according to claim 4, **characterized in that**, the cooling ports further include a heat-dissipating-circuit outlet port (a) and a heat-dissipating-circuit inlet port (b), the heat-dissipating-circuit inlet port (b) is in communication with an interior of the electric-motor-circuit outlet port (c), a radiator (5) is provided between the heat-dissipating-circuit outlet port (a) and the heat-dissipating-circuit inlet port (b), the heat-dissipating-circuit outlet port (a) is connected to an outlet pipe of the radiator (5), and the heat-dissipating-circuit inlet port (b) is connected to an inlet pipe of the radiator (5).

6. The integrated expansion tank for an electric vehicle according to claim 5, **characterized in that**, the electric-motor-circuit outlet port (c) is provided with a first hole (91), the heat-dissipating-circuit inlet port (b) is provided with a second hole (92), the first hole (91) and the second hole (92) are located within a cavity of the expansion tank (3), and a cross-sectional area of a joint between the electric-motor-circuit outlet port (c) and the heat-dissipating-circuit inlet port (b) is less than a cross-sectional area of a channel of the electric-motor-circuit outlet port (c).

7. The integrated expansion tank for an electric vehicle according to claim 5 or 6, **characterized in that**, the multi-way valve (4) is a five-way electromagnetic valve; when the five-way electromagnetic valve is in the parallel-connection state, the heat-dissipating-circuit outlet port (a) is in communication with the electric-motor-circuit inlet port (d), and the battery-circuit outlet port (e) is in communication with the battery-circuit inlet port (f); and when the five-way electromagnetic valve is in the series-connection state, the electric-motor-circuit outlet port (c) is in communication with the battery-circuit inlet port (f), and the battery-circuit outlet port (e) is in communication with the electric-motor-circuit inlet port (d).

8. The integrated expansion tank for an electric vehicle according to claim 4 or 5, **characterized in that**, the cooling-circuit pumps include a battery-circuit pump (2) provided in the battery cooling circuit (7) and an electric-motor-electrically-controlled-circuit pump (1) provided in the electric-motor-electrically-controlled cooling circuit (6), both of impeller shells of the battery-circuit pump (2) and the electric-motor-electrically-controlled-circuit pump (1) are integrated on the shell of the expansion tank (3) and are provided with a inlet and a outlet, the battery-circuit inlet port (f) is in communication with the inlet of the battery-circuit pump (2), and the electric-motor-circuit inlet port (d) is in communication with the inlet of the electric-motor-electrically-controlled-circuit pump (1).

9. The integrated expansion tank for an electric vehicle according to claim 1, **characterized in that**, the shell of the expansion tank (3) is further provided with a plurality of heating ports in communication with a heating circuit (8) of the electric vehicle, and the heating ports include a heating water-supplying port (h) and a heating gas-exhausting port (i), the heating water-supplying port (h) is in communication with the expansion tank (3) and the heating circuit (8), and the heating gas-exhausting port (i) is in communication with the expansion tank (3) and the heating circuit (8).

10. An electric vehicle, **characterized in that**, the electric vehicle comprises the integrated expansion tank for an electric vehicle according to any one of claims 1-9.
